# EUROPEAN PATENT SPECIFICATION

(11) **EP 0 420 955 B1**
(45) Date of publication and mention of the grant of the patent: **10.03.1993**
(21) Application number: 90905548.5
(22) Date of filing: 12.04.1990
(51) Int. Cl.: A01G 13/02

(54) **PROCEDURE AND MEANS FOR ATTACHING FILM USED IN COVERED CULTIVATION**
VERFAHREN UND BEFESTIGUNGSMITTEL FÜR FOLIEN IN ÜBERDECKTEN KULTUREN
PROCEDE ET MOYENS DE FIXATION DE FILMS UTILISES EN CULTURE COUVERTE

(30) Priority: 21.04.1989 FI 891905
(43) Date of publication of application: 10.04.1991
(73) Proprietor: BIODATA OY, SF-00370 Helsinki (FI)
(72) Inventor: SUOMINEN, Hannu, Lauri, SF-01280 Vantaa (FI); LINDEBERG, Erkki, SF-59800 Kesälahti (FI)
(74) Representative: Tiedtke, Harro, Dipl.-Ing.
(86) International application number: FI9000108
(87) International publication number: WO9012494

(56) References cited:
- US-A- 1 810 463
- US-A- 3 890 910
- US-A- 3 914 900

## Description

The present invention concerns a procedure for attaching a film for use in covered cultivation, in which a film is spread on a surface being cultivated, such as field.

The present invention also concerns a means for attaching a film used in covered cultivation on a surface being grown, such as field.

The nearest state of the art out of the same technical field is disclosed in US-A- 3 890 910.

As is known of prior art, plants are grown in greenhouses the covers of which are made from glass or plastic. The cover lets in both shortwave and longwave radiation in the area of the visible light. As known of prior art, the covers of greenhouses let in more shortwave radiation than longwave radiation, whereby more ultraviolet radiation is obtained into the greenhouse. Therefore, the light in the greenhouses heats when the shortwave radiation is transformed into heat within the greenhouse.

As is known of prior art, the greenhouse principle has been utilized on fields in that the coverings have been formed into arcs on top of the field, or that the covering is spread on the ground. The covering material in applications used on such fields has been plastic or paper through which the plants grow. By said known technique the following advantages are achieved: the temperature has been made to raise when the shortwave radiation is transformed into heat, maintaining moisture has been better than in growing without any covering. In addition, when a film not penetrating light has been used, weed can be prevented.

As is known of prior art, the films have been so attached on the ground that when a film is spread thereover, the longitudinal edges of the film are covered with soil (e.g. US-A-3 890 910). Generally the film has first been spread and thereafter, the seeds are sown and/or the plants are planted. Methods like this has been in use e.g. in growing corn. And for the advantage, a greater speed in growth has been achieved.

In said covered cultivation procedures of prior art, transparent film has generally been used. As an exception, for instance in growing strawberries black covering has been used. As to the state of art, it may be mentioned that bright films with edges covered with ground have been used, and that only the roots are located under the film. An advantage gained thereby is that the plants become ripe faster and greater crops are obtained.

A drawback of procedures known of prior art has been that at least as great quantities of herbicides are needed as in cultivating without said film, even more in some cases when using a bright film, moisture becomes condensed on the inner surface of the film, and it thus creates favourable circumstances for weed growing around the plant to be cultivated. In addition the feature that uncovered ground has been left between the films, increases possibilities of greater weed growth.

An additional drawback in designs of prior art has been that not more than about 50 to 70 per cent of the cultivated area can have been covered because it has been necessary to leave uncovered ground for the attaching embankment.

The films of prior art have frequently been decomposing due to the UV radiation, whereby the -C-C bond in the film is broken. Endeavours have been made to create such films which owing to the effect of UV radiation are broken down into so small pieces that micro-organisms are further able to break them down totally. However, decomposition in said film designs of prior art has not been complete because in practice the edge of the film covered by ground remains in the field because the UV radiation is not able to affect the film to break it down.

Such procedures are also known in the art in which the film is taken off from the fields after the cultivation season. The use of such film designs is however very expensive. In addition, in the procedures of prior art very thin films have been mainly used because their manufacture is cheaper. Removal of such films is, however, very difficult because the films are easily broken.

The object of the invention is to create a procedure and a means for attaching the film to be used in covered cultivation in which the entire cultivated area can be covered with film.

The procedure of the invention is mainly characterized in that when a film is spread, it is sewn with stitches to the surface being cultivated.

The means of the invention is mainly characterized in that the means comprises operation and guide means, and a roll for spreading film of the surface to be cultivated, a member for conveying the sewing thread to the surface to be cultivated, and members for conveying the sewing thread to the point to be stitched.

In addition, other advantageous characteristic features of the invention are presented in claims 2 to 8, and 10.

When the procedure and the means of the invention are used, the temperature rises and the moisture remains well under the film. As taught by the invention, the entire cultivated area can be covered with the film.

Associated with the procedure of the invention it is advantageous to use UV-decomposable films because the film will entirely be broken down in using the procedure of the invention for it is placed on the ground in its entirety. Associated with the procedure of the invention it is also equally advantageous to use biologically decomposing films. When the procedure of the invention is used, it is possible to use also film made from non-decomposable material which can easily be lifted off at the ends of the sewing thread.

The procedure and the means of the invention is described more in detail below referring to the figures of the accompanying drawing in which
Fig. 1 presents schematically films spread on fields,
Figs 2A and 2B present schematically cross-section A-A of Fig. 1,
Fig. 3 presents schematically the means used in the procedure of the invention, and
Figs 4A and 4B present schematically some possibilities as films for use in conjunction with the invention.

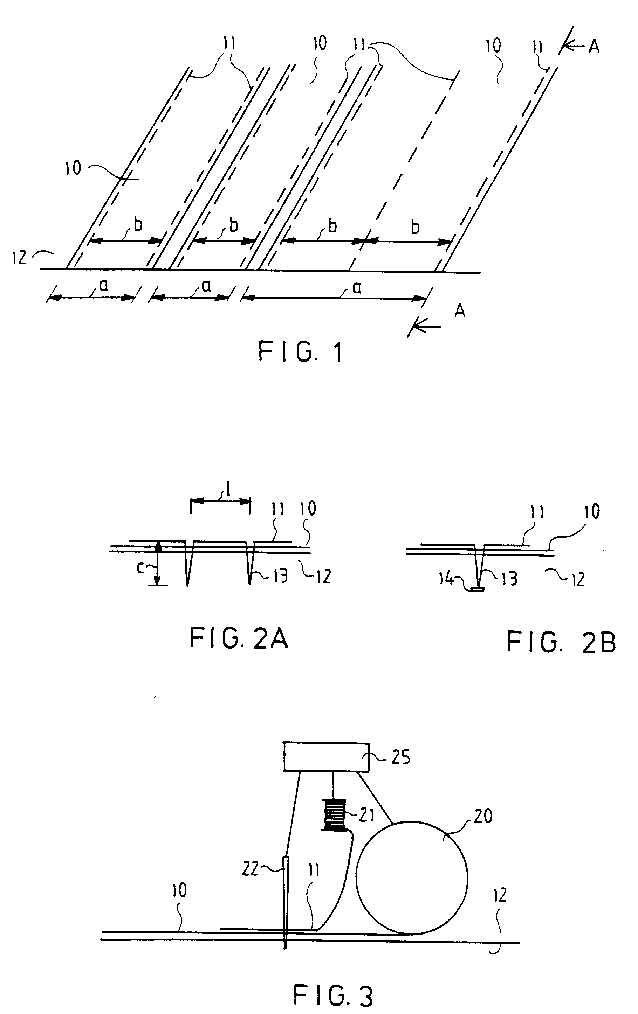

As shown in Fig. 1, films 10 are spread on a field next to one another. A film 10 is attach to the ground 12 by stitching 11. The stitches 11 are positioned on each edge of the films 10 and/or on the edges and in the middle of the film 10. The number and positioning of stitches 11 are dependent on the width of the film 10 and on the attaching properties of the ground.

As shown in Figs 2A and 2B, the seam 13 of stitching 11 penetrates the ground to a given depth. The depth c to be used depends on the soil. For instance, clay attaches very tight, whereby the depth c of the seam 13 need not be great. For less dense soil, anchoring extrusion 14 shown in Fig. 2B can be used at the end of the seam 13, which anchors the seam 13 to the ground.

Depending on the soil, depth C, length L of the seam 13, and the breadth of the sewing thread are selected.

For sewing thread material, e.g. the same material is used as that used in the film, said material being non-decomposing, or breaking down, owing to the effect of UV radiation, or biologically decomposing. For instance, various plastics and papers are appropriate for film and sewing thread materials.

The means of the invention comprises, as shown in Fig. 3, a roll 20 from which film 10 is spread on the field surface, and a roller 21 from which sewing thread 11 is conveyed to the point to be stitched, for instance along the edge of the film 10, and thereafter, a beater 22 takes the thread through the film into the ground and performs potential anchoring extrusion 14 (Fig. 2B). The operation and guide devices of the means are schematically presented in the figure by part 25. For the beater 22 of the means of the invention also a two-step beater can be used with which a hole is first made and then the seam

For such film is used preferably a film not penetrating light, in which some light penetrating areas have been made at plants. An illuminating illumination point can be made using mechanical, optical, or mechanical-optical methods. A flap can also be made in the light penetrating area, through which a plant may grow easily. After spreading and attaching the film seed can be sown or plant planted. Thus no toxic agents need be used and carry out mechanical weed prevention.

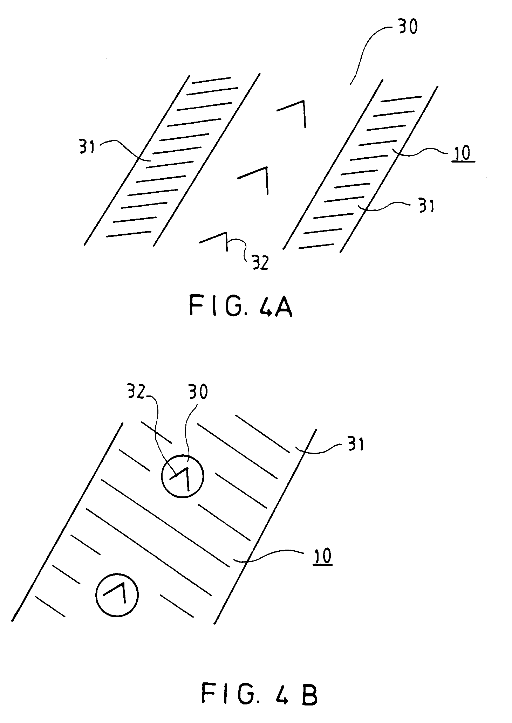

Figs 4A and 4B show two possibilities for use in association with the invention as films to penetrate light selectively. The film 10 of Fig. 4A comprises a light non-penetrating area 31 in the middle of which is positioned a light penetrating area 30 which has been provided optically. In the area 30 are produced mechanically flaps 32 through which the plants grow. As shown in Fig. 4B, in the light non-penetrating area 31 have been made light penetrating areas 30 in which flaps 32 have been placed. It is clear that covering cultivation films of many other types may also be used in addition to those described above.

The procedure of the invention enables biological prevention because in the procedure plants to be sown or planted may in each row be of a different kind, whereby monocultures are mixed and polyculture can be provided on fields, which substantially reduces agents needed in preventing plant diseases.

The space b between the stitchings 11 to be used (Fig. 1) is typically 100-500 mm, the width of the sewing thread varying from 1 to 100 mm, and the width a of the film 10 being 0.5 to 8 meter, which is dependent on the plant. For wider films 10, several stitchings 11 are used, e.g. for a 135 cm film 10 stitching 11 is used on both edges, whereas for a 270 cm wide film, it is good to use three stitchings 11 so that one stitching 11 is positioned in the middle of the film.

The depth c of the seam 13 of stitching 11 (Figs 2A,2B) varies, being dependent on the quality of the soil. For instance, the depth c is 100-200 mm.

The invention is described above with reference only to an advantageous embodiment example thereof. Thereby, there is not, however, any desire to confine the invention to relate only to said example, and several other variations and modifications are possible within the scope of the inventive idea determined by the claims stated below.

## Claims

1. A procedure for attaching a film used in covered cultivation, wherein the film (10) is spread on a surface (12) being cultivated, for instance a field, characterized in that when the film (10) is spread, the film (10) is attached by sewing with seams (13) of stitchings (11) to the surface (12) being cultivated.

2. A procedure according to claim 1, characterized in that in the procedure the film (10) is stitched with stitchings (11) so that stitchings (11) are provided at least on both longitudinal edges of the film (10).

3. A procedure according to claim 1 or 2, characterized in that the depth (c) of the seam (13) of the stitching (11) in the procedure is selected according to the ground so that the depth (c) of the seam (13) of the stitching (11) is preferably 100 to 200 mm.

4. A procedure according to any one of claims 1 to 3, characterized in that at an end of the seam (13) of the stitching (11) is made an anchoring extrusion (14).

5. A procedure according to any one of claims 1 to 4, characterized in that the width (a) of the film (10) used in the procedure is selected according to the plant to be cultivated so that the width (a) of the film (10) is preferably 0.5 to 8 m.

6. A procedure according to any one of claims 1 to 5, characterized in that in the procedure the space (b) between the stitchings (11) positioned on each film (10) is 100 to 500 mm in the breadth direction of the film (10).

7. A procedure according to any one of claims 1 to 6, characterized in that in the procedure most advantageously are used films (10) which include areas (30) and/or flaps (32) penetrating light, provided by optical and/or mechanical methods, and that the films (10) are made from a mainly light non-penetrating (31) material which is plastic, paper or equivalent, preferably material breaking down biologically and/or under the action of light.

8. A procedure according to any one of claims 1 to 7, characterized in that in the procedure the films (10) are spread on the surface (12) being cultivated so that nearly the entire cultivated area is under the films (10).

9. A means for carrying out the procedure of claims 1-8 for attaching a film (10) used in covered cultivation to a surface (12) being cultivated, e.g. field, comprises operation and guide means (25), characterized in that the means comprises a roll (20) for spreading the film (10) on the surface (12) being cultivated, a member (22) for conveying sewing thread (11) to the surface (12) being cultivated, and members (21) for conveying the sewing thread to the point to be stitched.

10. A means according according to claim 9, characterized in that the member (22) of the means is a one-step or a two-step beater.

## Patentansprüche

1. Verfahren zur Befestigung einer Folie bei überdeckten Kulturen, wobei die Folie (10) auf einer zu kultivierenden Fläche (12) ausgebreitet wird, z.B. auf einem Feld, dadurch gekennzeichnet, daß die ausgebreitete Folie (10) durch Nähte (13) aus Nahtstichen (11) an der zu kultivierenden Fläche (12) befestigt wird.

2. Verfahren nach Anspruch 1, dadurch gekennzeichnet, daß bei dem Verfahren die Folie (10) mit Nahtstichen (11) so angeheftet wird, so daß an mindestens beiden Längsrändern der Folie (10) Nahtstiche vorgesehen sind.

3. Verfahren nach Anspruch 1 oder 2, dadurch gekennzeichnet, daß die Tiefe (c) der Naht (13) aus Nahtstichen (11) ausgehend von der Bodenbeschaffenheit gewählt wird und vorzugsweise 100 bis 200 mm beträgt.

4. Verfahren nach einem der Ansprüche 1 bis 3, dadurch gekennzeichnet, daß am Ende der Naht (13) aus Nahtstichen (11) eine Verankerungsverlängerung vorgesehen wird.

5. Verfahren nach einem der Ansprüche 1 bis 4, dadurch gekennzeichnet, daß die Breite (a) der Folie (10) in Abhängigkeit von der zu kultivierenden Pflanzenart gewählt wird, so daß die Breite (a) der Folie (10) vorzugsweise 0,5 bis 8 m beträgt.

6. Verfahren nach einem der Ansprüche 1 bis 5, dadurch gekennzeichnet, daß bei dem Verfahren die Nähte (11) in einem Abstand (b) von 100 bis 500 mm in Richtung der Bahnbreite der Folie (10) angeordnet werden.

7. Verfahren nach einem der Ansprüche 1 bis 6, dadurch gekennzeichnet, daß bei dem Verfahren am vorteilhaftesten Folien (10) verwendet werden, die lichtdurchlässige Bereiche (30) und/oder Klappen (32) haben, die durch optische und/oder mechanische Methoden gebildet werden, und daß die Folien (10) hauptsächlich aus lichtundurchlässigem Material (31) hergestellt werden, das aus Kunststoff, Papier oder einem äquivalenten Material besteht, vorzugsweise aus biologisch und/oder durch Lichteinfluß zersetzbarem Material.

8. Verfahren nach einen der Ansprüche 1 bis 7, dadurch gekennzeichnet, daß bei dem Verfahren auf dem zu kultivierenden Boden die Folien (10) so ausgebreitet werden, daß sie den zu kultivierenden Bereich fast vollständig bedecken.

9. Vorrichtung zur Ausführung des Verfahrens nach den Ansprüchen 1 bis 8 zur Verwendung bei abgedeckten Kulturen zur Befestigung einer Folie (10) auf einer zu kultivierenden Fläche (12), z.B. einem Feld, mit Arbeits- und Führungsmitteln (25), dadurch gekennzeichnet, daß die Vorrichtung einen Wickel (20) zum Ausbreiten der Folie (10) auf dem zu kultivierenden Boden (12), ein Bauteil (22) zur Zuführung des Nähfadens (11) auf den Boden (12) und Bauteile (21) zur Zuführung des Nähfadens zum Einstichpunkt aufweist.

10. Vorrichtung nach Anspruch 9, dadurch gekennzeichnet, daß das Bauteil (22) als Ein-Schritt-Dorn oder als Zwei-Schritt-Dorn ausgeführt ist.

## Revendications

1. Procédé de fixation d'un film utilisé en culture sous abri, dans lequel le film (10) est étendu sur une surface cultivée (12), par exemple un champ, caractérisé en ce que lorsque le film (10) est étendu, le film (10) est attaché en effectuant une couture avec des points de couture (13) composant une couture (11) sur la surface (12) cultivée.

2. Procédé selon la revendication 1, caractérisé en ce que, dans le procédé, le film (10) est cousu à l'aide de coutures (11), de telle façon que les coutures (11) soient prévues au moins sur les deux bords longitudinaux du film (10).

3. Procédé selon la revendication 1 ou 2, caractérisé en ce que la profondeur (c) du point (13) de la couture (11) dans le procédé est sélectionné en fonction du sol de sorte que la profondeur (c) du point (13) de la couture (11) soit de préférence situé dans la plage allant de 100 à 200 mm.

4. Procédé selon l'une quelconque des revendications 1 à 3, caractérisé en ce qu'à une extrémité du point (13) de la couture (11) est réalisée une extrusion d'ancrage (14).

5. Procédé selon l'une quelconque des revendications 1 à 4, caractérisé en ce que la largeur (a) du film (10) utilisé dans le procédé est sélectionnée en fonction des plantes à cultiver, de façon que la largeur (a) du film (10) soit de préférence situé dans la plage allant de 0,5 à 8 m.

6. Procédé selon l'une quelconque des revendications 1 à 5, caractérisé en ce que, dans le procédé, l'espace (b) entre les coutures (11) positionnées sur chaque film (10) est de 100 à 500 mm, dans la direction transversale du film (10).

7. Procédé selon l'une quelconque des revendications 1 à 6, caractérisé en ce que, dans le procédé, on utilise avec le plus d'avantage des films (10) comprenant des aires (30) et/ou des volets (32) laissant pénétrer la lumière, traités par des procédés optiques et/ou mécaniques, et en ce que les films (10) sont principalement en un matériau ne laissant pas pénétrer la lumière (31), synthétique, en papier ou équivalent, de préférence un matériau dégradable biologiquement et/ou sous l'action de la lumière.

8. Procédé selon l'une quelconque des revendications 1 à 7, caractérisé en ce que, dans le procédé, les films (10) sont étendus sur la surface cultivée (12) de façon que presque toute la surface cultivée soit située sous les films (10).

9. Moyen pour mettre en oeuvre le procédé selon les revendications 1 à 8, pour assurer la fixation d'un film (10) utilisé dans la culture sous abri, sur une surface cultivée (12), par exemple un champ, comprenant des moyens fonctionnels et de guidage (25), caractérisé en ce que les moyens comprennent un rouleau (20) pour étendre le film (10) sur la surface cultivée (12), un organe (22) pour transporter le guide-points (11) sur la surface cultivée (12) et des organes (21) pour transporter le guide-points sur le point à piquer.

10. Moyen selon la revendication 9, caractérisé en ce que l'organe (22) du moyen est une tête de piquage à un point ou à deux points.
